# EUROPEAN PATENT APPLICATION

(11) **EP 2 138 402 A2**
(43) Date of publication of application: **30.12.2009**
(21) Application number: 09462003.6
(22) Date of filing: 07.04.2009
(51) Int. Cl.: B64F 5/00, E04G 1/36

(54) **Variable modular docking system**

(30) Priority: 07.04.2008 HU 0800217
(71) Applicant: Multiprojekt Kft., 2040 Budaörs (HU); Aquaprojekt Kft., 1118 Budapest (HU)
(72) Inventor: Fazekas, Gábor, 2030 Érd (HU); Petó, Lajos, 1118 Budapest (HU); Kollár, Lajos, 1117 Budapest (HU)
(74) Representative: Kacsuk, Zsófia

(57) **Abstract**

The invention relates to a variable dock unit (20) for use in a modular aircraft maintenance docking system (10); which dock unit comprises a support structure (34) and a walking platform (22) supported by the support structure. The walking platform comprises a substantially rectangular walking surface (24) having a cut-out portion (26) at its side for receiving an aircraft section and having slide trays (28) mounted along the cut-out portion (26), which slide trays (289 have a retracted and an extracted position such that the aircraft section receiving cut-out portion (26) is substantially free in the retracted position, and in the fully extracted position the slide trays form a walking surface extension (30) substantially covering the cut-out portion (26).
The invention further relates to a modular aircraft maintenance docking system (10) comprising such dock units and a method for designing such docking systems.

## Description

The present invention relates to a variable dock unit for use in a modular aircraft maintenance docking system, which dock unit comprises a support structure and a walking platform supported by the support structure.

The invention further relates to modular docking system for the maintenance of at least two types of aircraft, which modular docking system comprises a variable dock unit according to the invention. The invention further relates to a method for designing such a modular docking system.

The US 5,375,283 patent discloses a structure consisting of three scaffold-like docks, of which a nose dock is raisable and two fuselage dock assemblies are raisable and rotatable.

One of the disadvantages associated with the above solution is the unnecessarily complex and large steel structure, moreover the structure needs to be reassembled for use with every type of aircraft since the distance between the wing and the tail varies with the aircraft type. Another disadvantage is the relatively small working surface available. Furthermore, the structure is not flexible with regard to the use, in certain cases the user must choose where to apply the structure, for example at the wing tip or by the fuselage.

The US 5,423,396 patent discloses a dock assembly which is adapted for carrying out smaller maintenance work on and under the wing of an aircraft. This solution provides for an even more inconvenient application since the construction of the dock assembly requires mounting of a support structure around the aircraft, which needs to be dismantled after the maintenance work. This leads to many disadvantages: the constructional and dismantling operation is more time consuming than the actual maintenance work, moreover a different structure needs to be constructed for each type of aircraft.

The DE 9410194 U1 utility model is also known, which is slightly more advantageous than the previous constructions in that it allows for the displacement of the walking platform via a motor drive, hence the re-assembly for use with a different aircraft type can be carried out more swiftly.

It is an object of the present invention to overcome the problems associated with the prior art. In particular, it is an object of the invention to provide a multifunctional aircraft maintaining modular docking system for allowing easier and faster maintenance, painting and repair work, and which allows for carrying out painting and maintenance work in small series, and allows a high number of staff to work simultaneously. For the sake of simplicity hereafter all kinds of work operation (maintenance, painting, repairing, etc.) will be referred to collectively as maintenance work. Accordingly, in the context of the present invention maintenance is understood to comprise all the usual work operations effected from the outside of an aircraft, such as painting, repairing, constructional work, etc.

Another important aspect of the invention is the displacement by a crane, which is not provided for by the scaffold-like structures of the prior art.

A further object of the invention is to provide variable dock units, from which the same necessary and sufficient number of units are needed for a plurality of aircraft types, thus eliminating the need of storing dock units which become excessive when maintaining a different type of aircraft than the one for which they are designed.

In a first aspect of the invention the above objects are achieved by a variable dock unit and a modular aircraft maintenance docking system comprising such dock units. The dock unit comprises a support structure and a walking platform supported by the support structure. The walking platform comprises a substantially rectangular walking surface having a cut-out portion at its side for receiving an aircraft section and having slide trays mounted along the cut-out portion, which slide trays have a retracted and an extracted position such that the aircraft section receiving cut-out portion is substantially free in the retracted position, and in the fully extracted position the slide trays form a walking surface extension substantially covering the cut-out portion.

The variable dock unit preferably comprises lifting means for lifting and lowering the walking platform with respect to the support structure.

Preferred embodiments of the variable dock unit and the modular docking system are defined in the dependent claims.

The docking system according to the invention comprises dock units of robust structure, which allow for a large number of spatially different assembly arrangements owing to the cut-out portions and the slide trays optionally covering the cut-out portions. Accordingly, the docking system may be used for various types of aircrafts and at different states of the same aircraft, e.g. when the aircraft is standing on wheels, or when supported above the ground or, with mounted or dismantled landing gear and engine. The surface of the variable dock units, the lifting range, the slide tray assembly, the proportions of the fixed and the displaceable components all contribute to the multifunctional application of the docking system.

Preferably the fuselage side dock units are asymmetric so as to allow safe coverage around the supports and the landing gear even when used with substantially different types of aircrafts as well by arranging the dock units in a rotated position with respect to their own axis and the longitudinal axis of the aircraft.

Preferably minor maintenance work can be carried out on the nose dock without lifting the walking platform, either from the lowered nose dock or directly from the raisable steps.

The modular docking system preferably comprises a plurality of parts such as the nose dock, the wing dock kit, the fuselage side dock kit, the fuselage underside dock kit (for placing underneath the fuselage) and the tail dock. The different sized components of fix and adjustable height may be arranged such as to allow maintenance, repair and painting work to be carried out on different types of aircrafts. The fix and adjustable height dock units, which are preferably displaceable via rollers can be assembled in various ways, thus allowing sufficient space for mounting and dismantling the engines, and for the landing gears in the extracted and in the retracted position, and for mounting the aircraft support members surrounded by the docking system, while the working platforms are kept safe.

In a second aspect of the invention the above objects are achieved by a method for designing a modular docking system for the maintenance of at least two types of aircrafts. The method is characterised by comprising the steps of:
- recording the dimensional parameters of at least two types of aircrafts, preferably including the relative positions and dimensions of the fuselage, the wings, the landing gear, the engines and the support places of the aircraft,
- designing a fuselage side dock kit by choosing the dimensions of the dock units according to the invention such that:
   - the variable dock units can be assembled beside the fuselage of a first type of aircraft in a first assembly, wherein the slide trays of at least part of the dock units are partially retracted for receiving the landing gear and optionally support members of the first type of aircraft, while the slide trays at the remaining cut-out portions of the dock units are fully extracted to cover the remaining cut-out portions with a walking surface extension; and
   - the variable dock units can be assembled by the side of the fuselage of a second type of aircraft in a second assembly, wherein the slide trays of at least part of the dock units are partially retracted for receiving the landing gear and optionally support members of the second type of aircraft, while the slide trays at the remaining cut-out portions of the dock units are fully extracted to cover the remaining cut-out portions with a walking surface extension.

Particularly preferred embodiments of the method are defined in the dependent claims.

Further advantageous embodiments of the invention are defined in the attached dependent claims.

Further details of the invention will be apparent from the accompanying figures and exemplary embodiments.
Fig. 1 is a schematic top plan view of a docking system comprising variable dock units according to the invention.
Fig. 2 is a schematic top plan view illustrating the dimensions of the dock units of the fuselage side dock kit.
Fig. 3a is a schematic sectional view of the support structure and lifting means of an exemplary variable dock unit.
Fig. 3b is a schematic top plan view of the lifting means.
Fig. 3c is a schematic sectional view of a lifting means having a pair of rollers.
Fig. 4 is a schematic top plan view illustrating the dimensions of the dock units of the wing underside dock kit.
Fig. 5 is a schematic front view of the wing underside dock kit, the fuselage side dock kit and the fuselage underside dock kit.
Fig. 6 is a schematic front view of the nose dock.
Fig. 7 is a schematic front view of the tail dock.
Fig. 8 is a schematic top plan view of the docking system of Fig. 1 in a second assembly for carrying out maintenance work of a second type of aircraft.
Fig. 9 is a schematic top plan view of the docking system of Fig. 1 in a third assembly for carrying out maintenance work of a third type of aircraft.

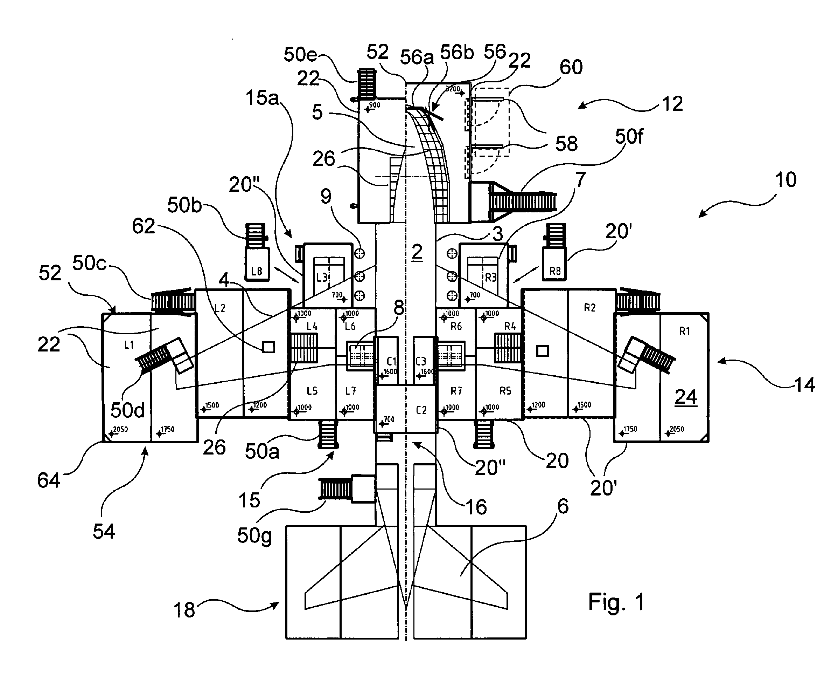

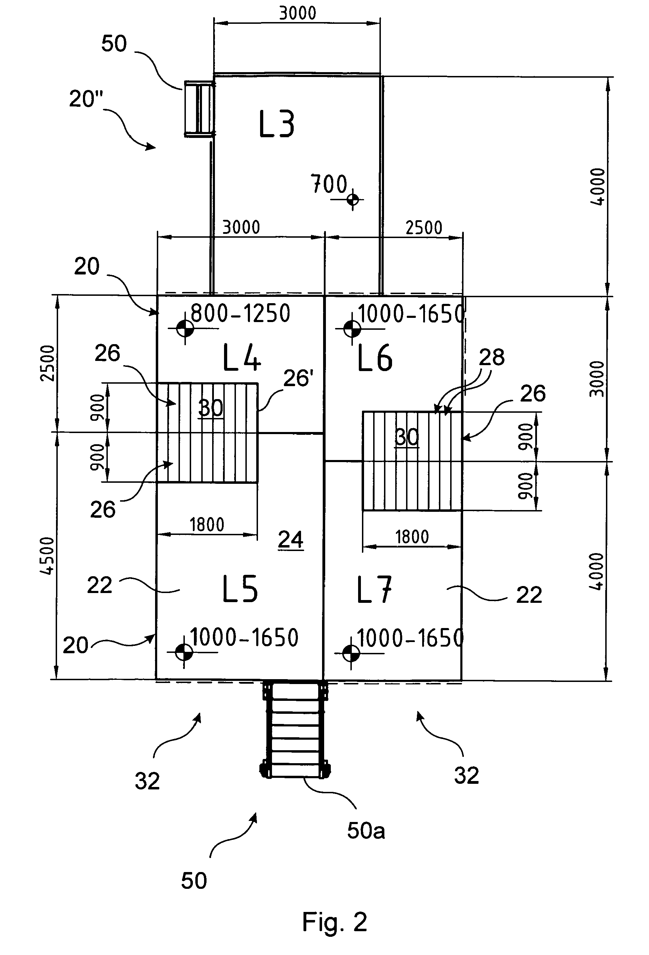

Fig. 1 shows a schematic top plan view of a docking system 10 adapted for carrying out maintenance work on Boeing 737 type of aircrafts 2. The aircraft 2 comprises a fuselage 3, wings 4, aircraft nose 5, aircraft tail 6, engine 7, landing gear 8 and support places 9, the latter serving for connecting a support member thereto in order to carry out maintenance work in a position where the aircraft 2 is lifted off the ground. The docking system 10 preferably comprises a nose dock 12, wing underside dock kit 14, fuselage side dock kit 15, fuselage underside dock kit 16, and tail dock 18. The docking system 10 is adapted for use with more than one aircraft types owing mainly to the variability of the dock units 20 of the fuselage side dock kit 15, of which the dock units 20 arranged on the left side of the aircraft 2 are illustrated separately as well in Fig. 2. All the dock units 20 comprise a walking platform 22 having a rectangular walking surface 24 with a cut-out portion 26' therein extending to the side of the walking surface 24. In the present case the cut-out portion 26 is formed as a corner cut-out portion 26', which is regarded as a special case of the general side cut-out portion 26, since the corner cut-out portion 26' forms a cut-out portion extending to two neighbouring sides. Nevertheless it is also possible to form a cut-out portion 26, which is open from only one side of the walking platform 22.

Extractable slide trays 28 are mounted along the corner cut-out portion 26'. The slide trays 28 form a walking surface extension 30 when in the extracted position. The walking surface extension 30 is substantially equal to the area cut-out of the walking surface 24 of the walking platform 22 in the fully extracted position of the slide trays 28, i.e. the slide trays 28 substantially cover the corner cut-out portion 26' in the extracted position. Preferably the slide trays 28 may be displaced individually allowing the formation of openings of different size and form within the cut-out portion 26'.

The fuselage side dock kit 15 comprises two left side and two symmetrical right side dock unit pairs 32 symmetric therewith and constituting of dock units L4, L5, L6, L7 and R4, R5, R6, R7 respectively. Fig. 2 depicts the two left side dock unit pairs 32 made up of the asymmetric dock units L4, L5, and L6, L7 respectively. The cut-out portions 26 (formed as corner cut-out portions 26' in the present embodiment) are dimensioned such that when the dock units L4, L5 and the dock units L6, L7 are coupled with their cut-out portions 26 facing each other, the walking platforms 22 form a continuous walking surface 24, while the cut-out portions 26 of the dock units L4 and L5, and the cut-out portions 26 of the dock units L6 and L7 jointly form an opening, each being adapted for receiving an aircraft section (a sectional portion of an aircraft). In the case of the fuselage side dock kit 15 the aircraft section to be received belongs to the landing gear 8, or in given cases the support member supporting the aircraft in the support positions 9. Any dock unit pair 32 may be formed as a single unit, having thus a single side cut-out portion 26. It is further conceivable to design an embodiment wherein the dock units 20 of one or all of the dock unit pairs 32 comprise, instead of a corner cut-out portion 26', side cut-out portions 26 reaching into the sides of the dock units 20 facing each other, such that a continuous walking surface 24 is formed on both sides of the side cut-out portions 26 when two such dock units 20 are coupled. The cut-out portions 26 (or the corner cut-out portions 26' as the case may be) of a dock unit pair 32 need not necessarily be symmetric, for example the uniform size of 1.8 m x 0.9 m as illustrated in Fig. 2 could be altered such that one of the cut-out portions 26 have a size of 1.8 m x 0.7 m, while the opposing cut-out portion 26 have a size of 1.8 m x 1.1 m. However, from the point of view of both the manufacturing and the application it may be preferable to have a uniform size.

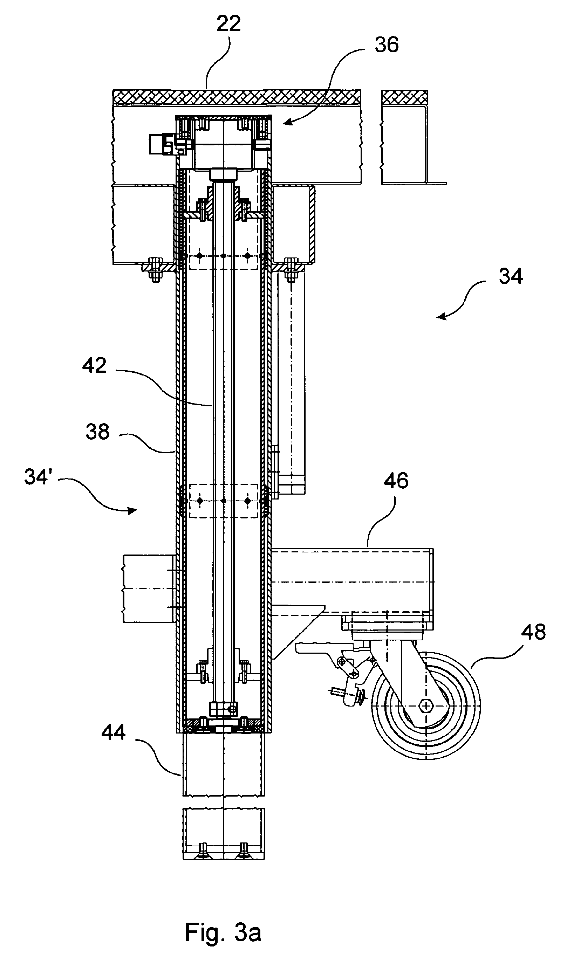

In the present embodiment the walking platforms 22 of the variable dock units 20 of the fuselage side dock kit 15 are mounted on a support structure 34, which comprises support columns 34' as can be seen in Fig. 3a. The walking platforms 22 are mounted on the support structure 34 such as to allow lifting and lowering of the platforms 22 via a lifting means 36 arranged inside the support columns 34'. In the present embodiment the lifting means 36 is formed as a motor driven self locking spindle drive lifting mechanism, wherein a motor driven central spindle (worm) 42 is arranged longitudinally within a tubular member 38 of the support column 34' for extracting or retracting a support leg 44 with respect to the tubular member 38. Preferable a roller 48 is connected to the tubular member 38 via a console 44 such that in the fully retracted position of the support leg 44 the support structure 34 is standing on the rollers 48, thus allowing the dock unit 20 to be displaced via the rollers 48. The support structure 34 preferably comprises four support columns 34' which support the walking platform 22 in four support places: at the four corners of the rectangular walking platform 22, or in the case of a corner cut-out portion 26' the fourth support column 34' is positioned along the longer side of the walking platform 22 next to the corner cut-out portion 26' in the corner formed by said side and the side of the corner cut-out portion 26'. It should be noted that the term "rectangular" is intended to comprise "square" as well as shapes having smaller deviations from a rectangle (e.g. by cutting of edges, rounding edges), such shapes are considered to be substantially rectangular too.

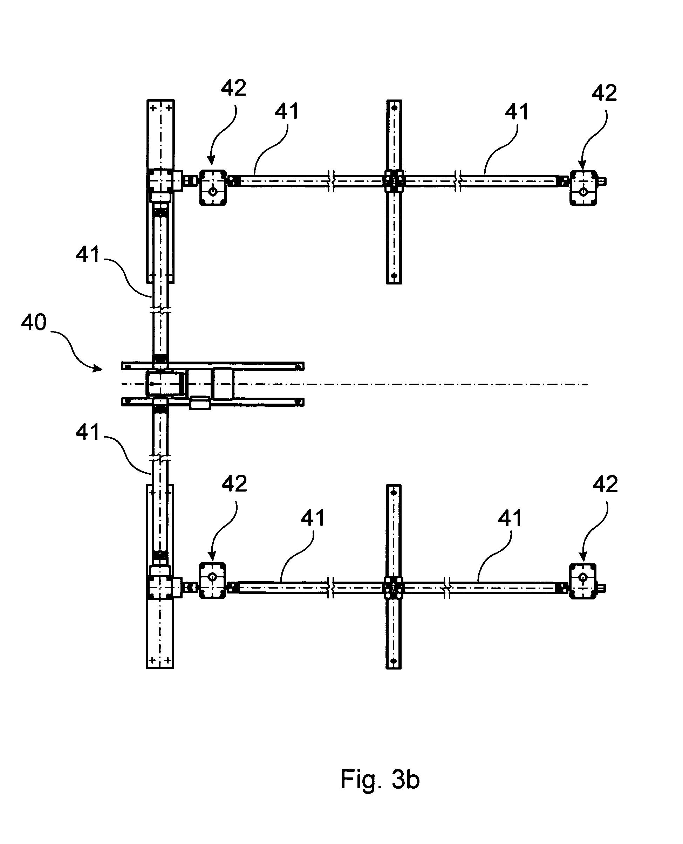

Preferably the four lifting means 36 mounted within the support columns 34' are driven by a common motor 40 via connecting shafts 41 transmitting the driving torque, as can be seen in the top plan view of Fig. 3b.

The docking system 10 preferably comprises steps 50 as well. The adjustable height walking platforms 22 of the fuselage side dock kit 15 are provided with steps 50a of adjustable height. Such adjustable height steps 50a may be constructed as self-regulating steps, which are pivotally connected to the dock unit L5, and stand on rollers, hence when the walking platform 22 of the dock unit L5 is lifted the legs of the self-regulating steps 50a roll closer to the dock unit L5. Another possibility is to use steps of adjustable angle of inclination such as the steps disclosed in JP 8128190 patent. In cases where the height of the steps needs to be adjusted within a larger range (e.g. at the nose dock 12) it is possible to use for example a telescopic step assembly such as the one disclosed in US 5,590,739, wherein double steps are slidable with respect to each other.

The length of the dock unit pairs 32 of the fuselage side dock kit 15 in the direction of the aircraft nose 5 is limited by the position of the engine 7. Preferably an independent engine dock kit 15a is provided for working around the engine 7, the dock kit 15a comprises right engine underside and left side engine underside dock units R3 and L3 respectively, and right engine side and left engine side dock units R8 and L8 (Fig. 1). In the case of a Boeing 737 classic type aircraft 2 the support places 9 are located between the engine 7 and the fuselage 3 of the aircraft 2, hence in the present embodiment either the engine underside dock units L3, R3 or the engine side dock units L8, R8 are in work position, the latter allowing access to the upper part of the engine 7. The engine side dock units L8, R8 are preferably adjustable in height, and are provided with steps 50b of adjustable height.

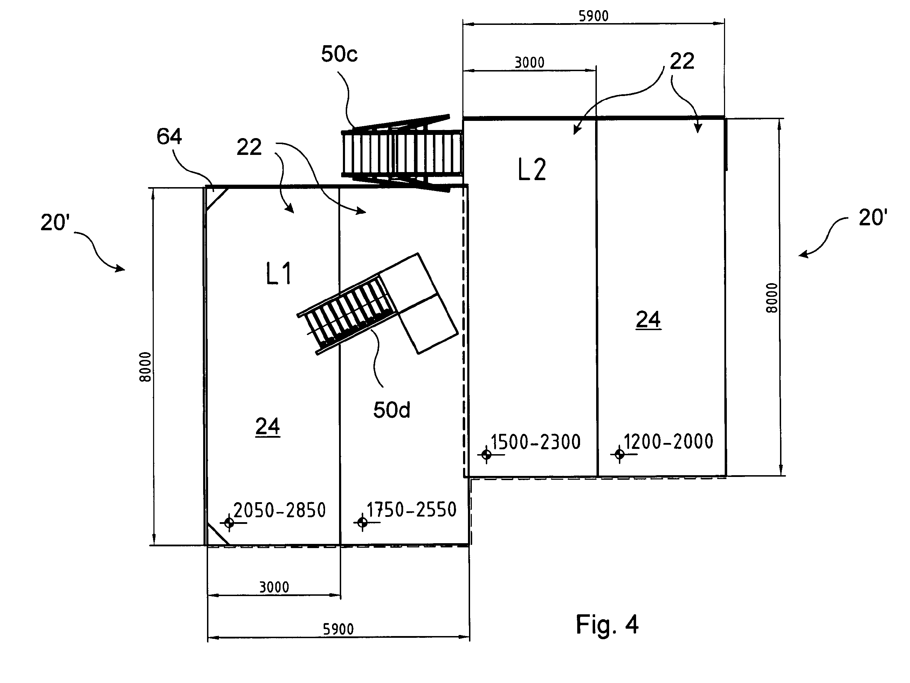

The wing underside dock kit 14 preferably comprises dock units 20' of adjustable height, wherein there are provided wing middle section dock units L2, R2 and wing outer section dock units L1, R1. The left side dock units L1, L2 are illustrated enlarged in Fig. 4. The dock units L1, L2 each comprise two walking platforms 22, which are arranged parallel to each other and with a vertical level difference. The level of each walking platforms 22 is adjustable with respect to the ground for example via the previously described lifting means 36. The level differences of the walking platforms 22 of each dock units L1, L2 is adjusted to follow the angle of elevation of the wings 4 in a step-wise manner, making sure that the level differences are not inconvenient when stepping from one walking surface 24 to the other. In the present embodiment it is not necessary to adjust the level of the walking platforms 22 of the same adjustable height dock unit 20' with respect to each other, hence the lifting and lowering of the walking platforms 22 with respect to each other is not necessarily provided for, which greatly simplifies the structure of such a dock unit 20'.

The wing middle section dock units L2, R2 are preferably provided with steps 50c of adjustable height. Preferably steps 50d of adjustable height are provided on the wing outer section dock units L1, R1 for allowing climbing up onto the top of the wings 4.

Preferably fixed guard rail members 52 or pivoting guard rail members 54 are provided at the sides of the dock units 20' of adjustable height, for example fixed guard rail members 52 may be provided on one side, while pivoting guard rail members 54 may be provided on the opposite side, the latter being pivotable downwardly to an open position allowing access to and from the walking platform 22. Similarly, all the dock units of the docking system 10 may be provided with fixed and/or pivoting rail members if required. The fixed guard rail members 52 may advantageously be provided with explosion-proof electric and connection sockets and compressed-air connectors.

The dock units 20' of adjustable height of the wing underside dock kit 14 are preferably also equipped with a support structure 34 having rollers 48, being thus easily displaceable in the aircraft shed to the position for working on the given type of aircraft 2.

The fuselage underside dock kit 16 may comprise dock units 20" of fixed height or dock units 20' of adjustable height depending on the intended application. In the present example the aircraft types to be maintained require dock units of uniform height, thus dock units 20" of fixed height (dock units C1, C2, C3) may be used in the present case. The dock units 20" allow for access into the aircraft 2 via the doors provided on the underside of the fuselage 3 of the aircraft 2.

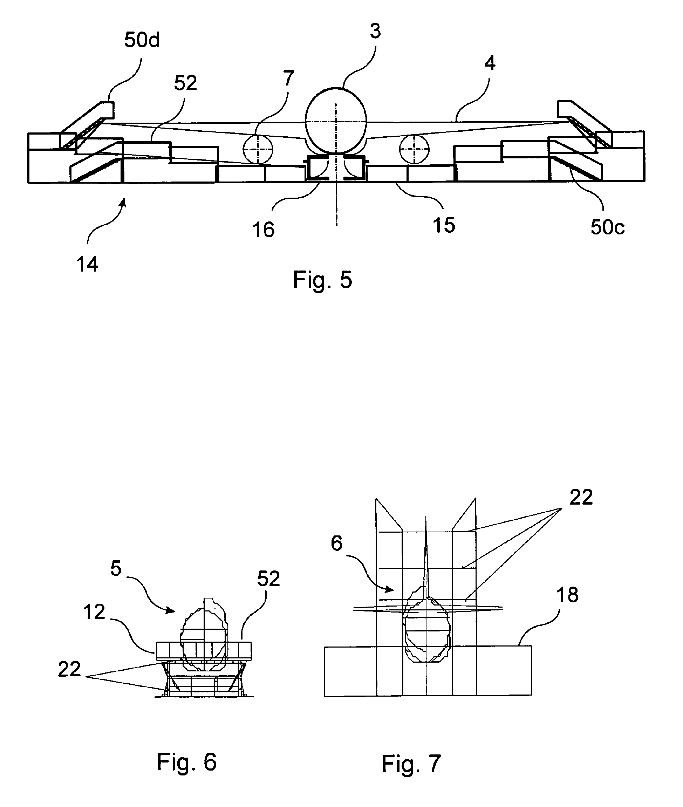

The vertical location of the wing underside dock kit 14, the fuselage side dock kit 15 and the fuselage underside dock kit 16 may be observed in Fig. 5.

The front view of a nose dock 12 is illustrated in Fig. 6. The nose dock 12 comprises a single variable dock unit 20, which has two walking platforms 22 mounted one below the other, i.e. at different levels. The lower platform 22 is depicted on the left side of the aircraft nose 5 in Fig. 1, while the upper platform 22 is depicted on the right side. The walking platforms 22 are equipped with common or separate lifting means 34 via which the platforms 22 can be lifted or lowered jointly or independently. Both walking platforms 22 have a cut-out portion 26 at the side facing the fuselage, which cut-out portions 26 are designed to receive the aircraft nose 5 (as aircraft section). The cut-out portion 26 of the upper walking platform 22 preferably corresponds to the typical profile of the nose 5 of the different types of aircrafts 2. The cut-out portions 26 can be covered with slide trays 28 connected to the walking platforms 22, which slide trays 28 may be extracted in the direction of the central longitudinal axis of the cut-out portions 26. The slide trays 28 are preferably provided with flexible abutments at their ends in order to protect the section of the nose 5, which is received in the cut-out portions 26 when extracting and abutting the slide trays 28 on the wall of the nose 5. In the case of the upper walking platform 22 it is sufficient that the slide trays 28 be long enough to abut the smallest type of aircraft nose 5 in the fully extracted position in all the heights used for carrying out maintenance work on the wall of the nose 5, because there is typically no work phase when the upper walking platform 22 would be completely below or above the nose 5, i.e. when the cut-out portion 26 would need to be completely covered. In the context of the present invention even in such case will be described as slide trays 28, which in the fully extracted position form a walking surface extension 30 substantially covering the cut-out portion 26.

Both walking platforms 22 are preferably surrounded by fixed and/or pivoting guard rail members for the sake of work protection.

Preferably a blocking guard rail 56 is mounted at the nose tip side of the cut-out portion 26 of the upper walking platform 22, such that it is slidable towards the aircraft nose 5 so as to ensure safe passage in front of the nose 5. The blocking guard rail 56 preferably comprises a central rail member 56a, and two rail wings 56b pivotally connected thereto on both sides. When the rail wings 56b are pivoted to the open position they will block the part of the cut-out portion 26 at the nose end. This is particularly important when the radar dome is removed from the nose 5 but the area needs to be kept free for maintenance work, meaning that the slide trays 28 cannot be extracted. In such instances the unsafe opening can be railed off by unfolding the rail wings 56b, i.e. pivoting them to the open position.

Preferably the nose dock 12 comprises a loading console pair 58, which is pivotally connected to the upper walking platform 22 and may be pivoted to extend from the platform 22 in order to support a loading bucket. This facilitates the loading of materials and equipment onto and from the upper walking surface 24.

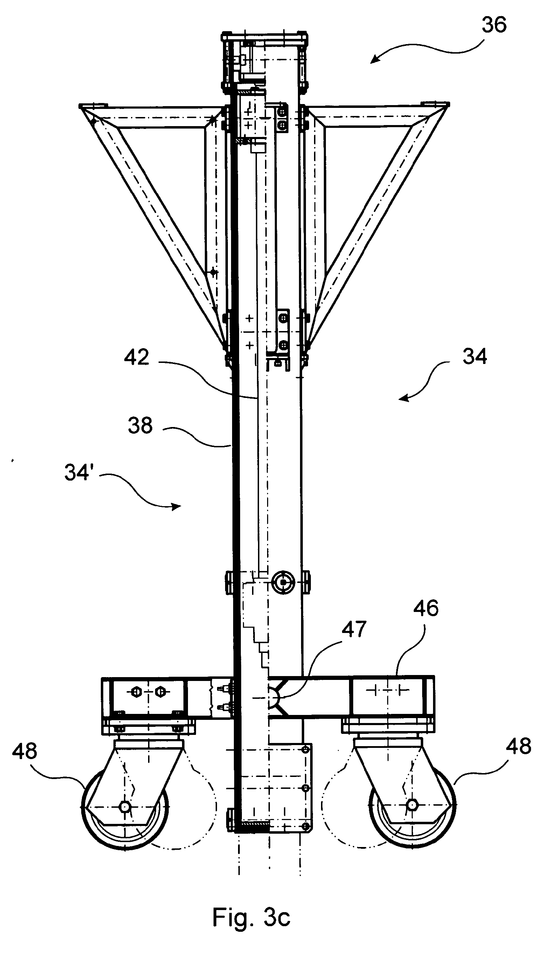

The nose dock 12 preferably comprises a similar lifting means 36 as the one previously described, differing there from in that a console 46 extending in two direction (referred to as double side console) is connected to the tubular member 38 via an axle pin 47, and a roller 48 is mounted at both ends of the double side console 46 (Fig. 3c). The console 46 can pivot around the axle pin 47, whereby the rollers 48 follow any unevenness of the ground. The benefit of arranging the double rollers 48 on the support columns 34' as compared to the single roller arrangement depicted in Fig.3a resides in that when using the double rollers 48 the load is always in the centre, whereby the support column 34' is free of any lateral bending load which would amount to substantial strain in case of a larger dock unit, such as the nose dock 12.

The walking platforms 22 of the nose dock 12 are preferably equipped with steps 50 of adjustable height. The lower walking platform 22 is preferably provided with self adjusting steps 50e, while the upper walking platform 22 is preferably provided with telescopic steps 50f having an upper platform, for example such as the telescopic step assembly disclosed in US 5,590,739.

In the present embodiment the nose dock 12 is formed as a single variable dock unit 20, however it should be noted that the nose dock 12 may equally comprise two symmetric (right side and left side) dock units, having corner cut-out portions 26' facing each other, which when fitting the two units together will form a single cut-out portion 26 for receiving the aircraft nose 5.

The docking system 10 preferably comprises a tail dock 18 as well, which may also be formed as a single dock unit 20' of variable height, or two symmetric (right side and left side) dock units 20'. The front view of the tail dock 18 can be seen in Fig. 7. The tail dock 18 preferably comprises a lower walking platform 22, which can be lifted or lowered independently, and three upper walking platforms 22 arranged thereabove, which are preferably lifted or lowered collectively via a common lifting means 36. The tail dock 18 is preferably equipped with telescopic steps 50g of adjustable height as well.

Preferably the dock units 20, 20', 20" have an antislip walking surface 24, wherein openings 62 may be formed for a vapour exhaust duct, which opening 62 may be covered when out of use.

The surfaces of the steps 50 are preferably transparent, and they are preferably provided by antislip rails at their sides.

The dock units 20, 20', 20" of the wing underside dock kit 14, the fuselage side dock kit 15 and the fuselage underside dock kit 16 are preferably provided with hidden lighting 64 in order to illuminate the wings 4, the fuselage 3 and other aircraft sections.

Preferably all the dock units 20, 20', 20" are provided with rollers and can thus be easily moved to the location of the maintenance work.

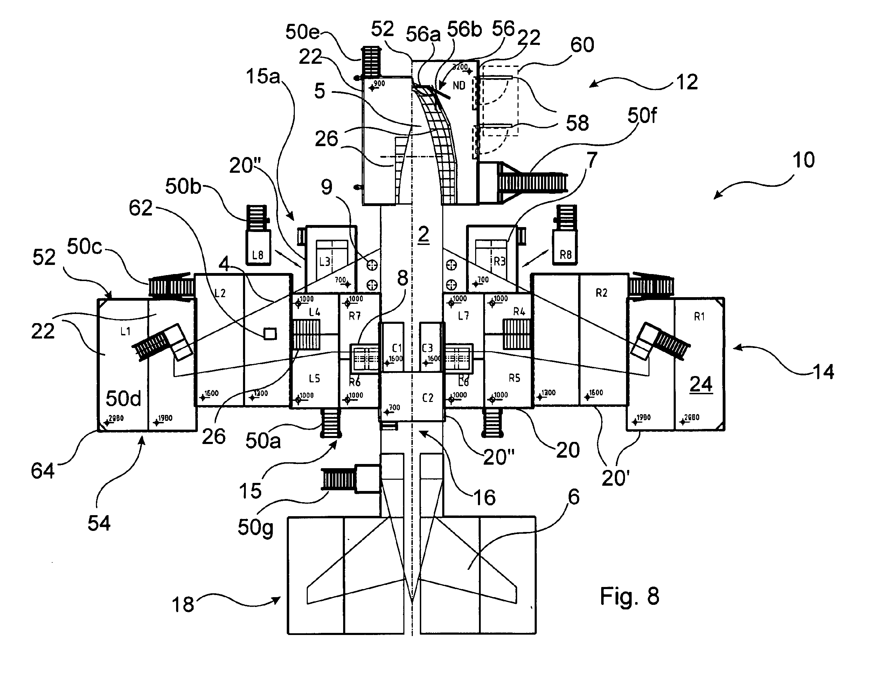

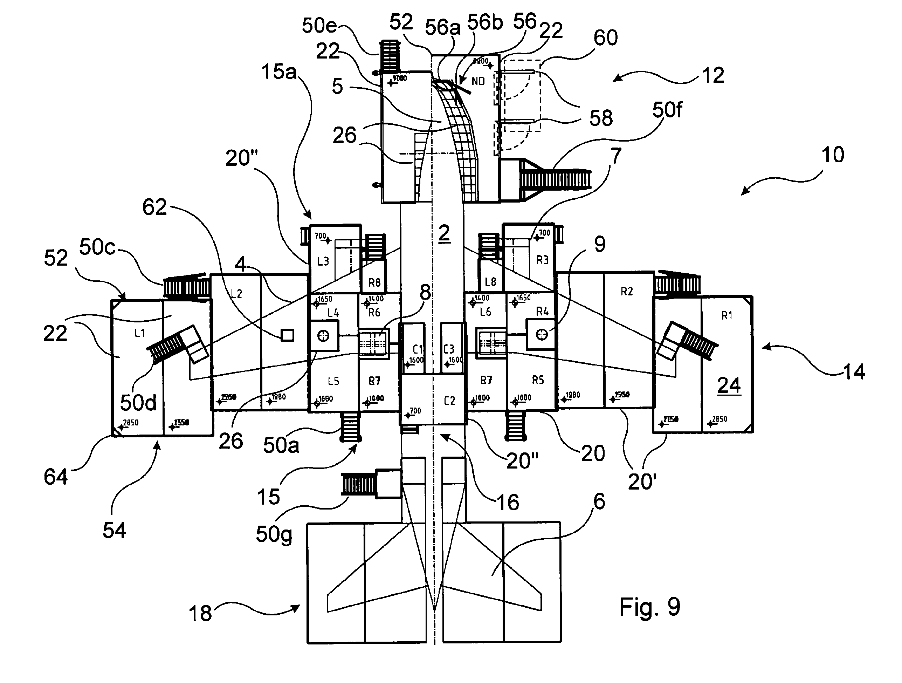

The dimensions and adjustable parameters (such as the height) of the dock units 20, 20', 20" of the embodiment depicted in Fig. 1 are chosen so as to adapt the docking system 10 to be suitable for carrying out maintenance work on three different types of aircrafts 2. Fig. 1 illustrates the assembly suitable for use with a Boeing 737 classic type aircraft 2. The same dock units 20, 20', 20" can be reassembled as shown in Fig. 8 and 9 for use with a Boeing 737 NG type and an Airbus 320 type aircrafts 2 respectively.

As can be seen in Fig. 8 the landing gear 8 of the aircrafts 2 belonging to the Boeing 737 NG aircraft-family are closer to the aircraft tail 6, therefore the dock unit pairs 32 made up of the dock units L6, L7 and the dock units R6, R7 are transposed and rotated by 180 degrees with respect to their position depicted in Fig. 1. Thereby the dock unit pair 32 made up of the right side dock units R6 and R7 are placed on the left side of the aircraft 2, wherein the dock unit R7 is arranged closer to the nose 5 and the dock unit R6 is arranged closer to the tail 6. Similarly, the left side dock units L6, L7 are transferred to the right side of the aircraft 2 and assembled in a rotated position.

The level of the walking platforms 22 of the wing middle section dock units L2, R2 and the wing outer section dock units L1, R1 of the wing underside dock kit 14 are reset from the stepwise values applied for the Boeing 737 classic type (being 1.2 m, 1.5 m, 1.75 m, 2.05 m respectively) to the heights of 1.3 m, 1.6 m, 1.9 m and 2.2 m respectively, in order to ensure that the walking surfaces 24 of the walking platforms 22 follow the wing elevation angle of the Boeing 737 NG aircraft family to a sufficient extent. The height of the steps 50c is adjusted to the new heights of the dock units L2 and R2, and the height of the steps 50d mounted on the dock units L1, R1 is adjusted to the wing 4 of the Boeing 737 NG type aircraft under maintenance, thus allowing access to the top of the wings 4.

The variable dock unit 20 of the nose dock 12 is reset as well: the lower and the upper platforms 22 are both lowered by 0.9 m (the resulting height may naturally be changed during the maintenance work) and the position of the slide trays 28 is adjusted to the profile of the nose 5 of the Boeing 737 NG type aircraft received within the cut-out portion 26. The height of the telescopic steps 50f is lowered in accordance with the new level of the upper walking surface 24, while the height of the steps 50e is self adjusting.

The docking system 10 according to the invention is also adapted for carrying out maintenance work of the Airbus 320 type aircraft-family in the assembly illustrated in Fig. 9.

As can be seen the landing gear 8 of the aircrafts 2 belonging to the Airbus 320 aircraft-family are further away from the fuselage 3 of the aircraft 2, therefore the dock unit pairs 32 made up of the dock units L6, L7 and the dock units R6, R7 are transposed with respect to their position depicted in Fig. 1. Thereby the dock unit pair 32 made up of the right side dock units R6 and R7 are placed on the left side of the aircraft 2, while the left side dock units L6, L7 are transferred to the right side of the aircraft 2.

The support places 9 of the aircrafts 2 belonging to the Airbus 320 aircraft-family are right above the openings defined by the cut-out portions 26 of the dock units L4, L5 and R4, R5 respectively. By retracting the slide trays 28 covering the cut-out portions 26, sufficient space is ensured for a support member positioned under the support places 9, thus the aircraft 2 can be maintained when raised from the ground as well. The slide trays 28 are extractable to abut the support member, thereby the opening surrounding the support member is minimised which could otherwise be a source of accident.

The dimensional parameters of the Airbus 320 type aircraft-family is substantially different from the dimensions of the two Boeing 737 aircrafts, hence in the present case the height of the dock units 20, 20' of the wing underside dock kit 14, of the fuselage side dock kit 15 as well of the nose dock 16 must be reset.

The height of the walking platforms 22 of the dock units R6, R7, L6, L7 of the fuselage side dock kit 15 closest to the fuselage 3 is set from 1 m to 1.4 m; the height of the walking platforms 22 of the dock units L4, L5, R4, R5 further away from the fuselage are raised from 1 m to 1.65 m in order to ensure that the walking surfaces 24 of the walking platforms 22 follow the angle of elevation of the wings of the Airbus 320 type aircraft-family to a sufficient extent.

The height of the walking platforms 22 of the wing middle section and wing outer section dock units L2, R2 and L1, R1 of the wing underside dock kit 14 is also reset to the heights of 1.95 m, 2.25 m, 2.55 m and 2.85 m respectively in order to ensure here as well that the walking surfaces 24 of the walking platforms 22 follow the angle of elevation of the wings of the Airbus 320 type aircraft-family to a sufficient extent. The height of the steps 50c is set to the new height of the dock units L2, R2, and the height of the steps 50d mounted on the dock units L1, R1 is adjusted to the wing 4 of the Airbus 320 type aircraft under maintenance, thus allowing access to the top of the wings 4.

The variable dock unit 20 of the nose dock 12 is reset as well: the lower and the upper platforms 22 are raised from 0.9 m and 3.2 m to 1.7 m and 4 m respectively via the lifting means 36 (the resulting height may naturally be changed during the maintenance work) and the position of the slide trays 28 is adjusted to the profile of the nose 5 of the Airbus 320 type aircraft within the cut-out portion 26. The height of the telescopic steps 50f is lowered in accordance with the new level of the upper walking surface 24, while the height of the steps 50e is self adjusting.

Since the support position 9 of the Airbus 320 type aircraft 2 is above the intended position of the fuselage side dock kit 15, hence sufficient space is available by the engine 7 and the fuselage 3 to assemble the whole of the engine dock kit 15a. In this case the right side and left side dock units R8 and L8 are transposed in order to allow access to the top of the engine 7 from the direction of the fuselage 3. The height of the adjustable height dock units R8 and L7 is adjusted to the engine 7 height, together with the steps 50b.

As can be seen, the high variability of the docking system 10 is due, firstly, to the variable dock units 20 comprising the cut-out portions 26, which may be covered or left open, and secondly to the wing underside dock units L1, L2, R1, R2 of adjustable height.

Which dock units need to be adjustable in height, and the range within which vertical lifting and lowering must be ensured depends on the types of aircrafts that are to be maintained with the help of the docking system 10. For example if the docking system 10 is intended for use with the Boeing 737 classic and NG type aircraft-family only, then the dock units 20 of the fuselage side dock kit 15 need not be adjustable in height, thus the lifting means 36 can be dispensed with. In case of other types of aircrafts it may occur for example that the engine 7 is at a higher or lower position, hence the dock units 20" of fixed height (the dock units L3, R3) under the engine 7 need to be provided with a liftable/lowerable walking platform 22 as well.

The invention relates to a method for designing a modular dock system 10, which is suitable for use with at least two different types of aircrafts.

First, the dimensional parameters of the two or more types of aircrafts are recorded (registered), such as in particular the relative positions and dimensions of the fuselage 3, the wings 4, the engine 7, the landing gear 8 and the support positions 9 of the aircrafts.

The variable dock units 20 of the fuselage side dock kit 15 are designed based on the data acquisition. The dimensions need to be designed such that when the variable dock units 20 are assembled beside the fuselage 3 of the first type of aircraft 2 in a first assembly sufficient space should be left free for the fuselage side aircraft sections/parts (such as the engines 7, the landing gear 8, the support members mounted under the support positions 9) either outside of the dock units 20 or within the cut-out portions 26 of the dock units, while - apart from the places occupied by the aircraft sections - the walking surfaces 24 of the dock units 20 and the walking surface extensions 30 formed by the extracted slide trays 28 covering the excessive cut-out portions 26 in the given assembly ensure safe passage for the workers.

In certain cases it may be necessary to adjust the height of the variable dock units 20 (for example to correspond to the height requirements of the Boeing 737 aircraft-families and the Airbus 320 type of aircrafts 2. Accordingly, the dock units 20 comprise lifting means 36 for lifting and lowering the walking platforms 22 with respect to the support structure 34. The lifting range of the lifting means 36 is chosen so as to be able to set the level of the walking platform 22 to the heights required by each aircraft type. Naturally, the height of the variable dock units 20 need not be adjustable at all if, for example, only the Boeing 737 classic and NG type of aircrafts are to be maintained therewith.

The dimensioning problem can always be solved when considering two similar sized aircraft types, because in such instances one need only consider the landing gears 8 and - as the case may be - the support positions 9. It is generally possible to find such an appropriate system for even three types of aircrafts, which system does not require more than four dock unit pairs 32 - for example this is the case as regards the dimensioning indicated in Fig. 2 for use with the Boeing 737 classic and NG and the Airbus 320 types. The dock units L4 and R4 comprise a walking platform 22 of 3 m x 2.5 m having a cut-out portion 26 of 1.8 m x 0.9 m, and the dock units L5 and R5 comprise a walking platform 22 of 3 m x 4.5 m having a cut-out portion 26 of 1.8 m x 0.9 m, the dock units L6 and R6 comprise a walking platform 22 of 2.5 m x 3 m having a cut-out portion 26 of 1.8 m x 0.9 m, and the dock units L7 and R7 comprise a walking platform 22 of 2.5 m x 4 m having a cut-out portion 26 of 1.8 m x 0.9 m. The height of the walking platforms 22 of the dock units L4, R4 is adjustable within 0.8 m and 1.25 m, the height of the walking platforms 22 of the dock units L5, L6, L7 and R5, R6, R7 are adjustable within 1 m and 1.65 m. This dimensioning allows fuselage side maintenance work to be carried out on Boeing 737 classic and NG type of aircrafts as wall as Airbus 320 type of aircrafts in the assembling arrangement illustrating in fig. 1, 6 and 7 respectively.

It will be apparent to the skilled person that the same geometry can be obtained with different partitioning of the components, for example some of the dock unit pairs 32 may be formed as a single unit having a single side cut-out portion 26 reaching into its side. Further possible variations are also conceivable, for example the cut-out portions 26 need not be symmetric. For example the 2.5 m long side of the dock unit L4 may be extended, whereby the cut-out portion 26 is extended as well, while the length of the dock unit L5 together with its cut-out portion 26 may be decreased with the same amount. Clearly there are a number of other possible variations which do not modify the assembly arrangement of the dock units 20 for each type of aircrafts. Furthermore, substantially different partitioning is also conceivable which may result in substantially different assembly arrangements of the dock units 20 for each type of aircrafts. Furthermore, it is clear that the fuselage side dock unit kit 15 may comprise dock units 20' or 20" of adjustable or fixed height, which are not provided with cut-out portions 26, for example the longest dock units L5, R5 may be substituted with a shorter variable dock unit 20 and an adjustable height dock unit 20' in addition, the two substituting dock units corresponding to the dock units L5, R5 in size. Furthermore the engine dock kit 15a may be regarded as a component of the fuselage side dock kit 15 since their dimensioning is strongly related.

The inventive concept resides in the recognition that instead of providing a scaffold-like dock assembly which is dimensioned for use with a given type of aircraft, it is possible to design a modular docking system 10 comprising variable dock units 20, which units are adapted for the maintenance work of various types of aircrafts 2 when assembled in different ways. The modular docking system 10 has many advantages compared to the conventional aircraft dock assemblies. The relatively small variable dock units 20 are easy to store when out of use, moreover a single docking system 10 is adapted for the maintenance work of various types of aircrafts.

It should be noted that the Boeing 737 classic and NG as well as the Airbus 320 each refers to a whole aircraft-family. The aircrafts 2 of the same aircraft-family are of basically similar construction however minor differences may occur within the same family as regards the exact dimensioning and the exact location of certain aircraft sections/parts (for example regarding the engine 7, the landing gear 8, the support positions 9, the nose profile, the wing profile, etc.). This is taken into consideration when designing the docking system 10, and the cut-out portions 26 are dimensioned such as to be adapted to receive the desired aircraft section in spite of the minor variations of size and location, and the dock units 20, 20', 20" are dimensioned such as to allow assembling of the docking system around such aircraft section.

The range of lifting/lowering the walking platforms 22 of the wing outer section dock units L1, R1 and the wing middle section dock units L2, R2 are determined such as to ensure that the walking platforms 22 follow the angle of elevation of the wings 4 of the aircraft 2 in a stepwise manner when adjusted to the working height. The relative position of two walking platforms 22 of the same dock unit 20' may be fixed with respect to each other, for example 0.3 m, ensuring that one may easily step over from one platform 22 to the other. The dock units L1, R1, L2, R2 comprise two walking platforms 22 mounted next to each other with a vertical spacing, however, if required the walking surface 24 may be divided into more portions and the dock units 20' may comprise more than two walking platforms 22, which may be fixed or displaceable relative to each other.

One of the aspects to be taken into account when designing the length and width of the wing outer section and wing middle section dock units L1, R1 and L2, R2 of the wing underside dock kit 14 is to allow sufficient space for safe passage at the sides of the type of wings with the greatest size.

When designing the nose dock 12 the range within which the walking platforms 22 should be raisable is determined by the nose 5 of each type of aircraft. Preferably the walking platform 22 may be lowered to the ground level. The dimensions of the cut-out portions 26 of the upper and lower walking platforms 22 are determined such as to exceed the size of the nose profile to be received for each type of aircraft. As regards the lower walking platform 22 the only condition is to be able to receive the nose wheel (as a special part of the nose 5) in the lowered position. However, it may occur that the upper walking platform 22 has to be lifted in order to carry out maintenance work on the upper part of the nose 5. In such cases, if the lower and the upper walking platforms 22 are provided with a common lifting means 36, it is typically necessary that the lower walking platform 22 receive the lower section of the nose 5, which needs to be taken into consideration as well when designing the nose dock 12.

It should be appreciated that various modifications will be apparent to a person skilled in the art with respect to the above-described embodiments and without departing from the scope of protection determined by the attached claims.

### Reference numerals:

- 2: aircraft
- 3: fuselage
- 4: wings
- 5: aircraft nose
- 6: aircraft tail
- 7: engine
- 8: landing gear
- 9: support places
- 10: docking system
- 12: nose dock
- 14: wing dock kit
- 15: fuselage side dock kit
- 15a: engine dock kit
- 16: fuselage underside dock kit
- 18: tail dock
- 20: dock unit
- 22: walking platform
- 24: walking surface
- 26: cut-out portion
- 26': corner cut-out portion
- 28: slide tray
- 30: walking surface extension
- 32: dock unit pair
- 34: support structure
- 34': support column
- 36: lifting means
- 38: tubular member
- 40: motor
- 41: connecting shaft
- 42: spindle
- 44: support leg
- 46: console
- 47: axle pin
- 48: roller
- 50: steps
- 50a: steps
- 52: fixed guard rail member
- 54: pivoting guard rail member
- 56: blocking guard rail
- 56a: rail member
- 56b: rail wing
- 58: console pair
- 62: opening
- 64: hidden lighting

- L1, R1: wing outer section dock units
- L2, R2: wing middle section dock units
- L3, R3: engine underside dock unit
- R4-R7: dock unit
- L4-L7: dock unit
- L8, R8: engine side dock unit

## Claims

1. Variable dock unit (20) for use in a modular aircraft maintenance docking system (10), which dock unit (20) comprises a support structure (34) and a walking platform (20) supported by the support structure (34), **characterised by** that the walking platform (22) comprises a substantially rectangular walking surface (24) having a cut-out portion (26) at its side for receiving an aircraft section and having slide trays (28) mounted along the cut-out portion (26), which slide trays (28) have a retracted and an extracted position such that the aircraft section receiving cut-out portion (26) is substantially free in the retracted position, and in the fully extracted position the slide trays (28) form a walking surface extension (30) substantially covering the cut-out portion (26).

2. The dock unit according to claim 1, **characterised by** comprising lifting means (36) for lifting and lowering the walking platform (22) with respect to the support structure (34), and preferably the support structure (34) comprises support columns (34') having a single side or double side console (46) with one or two rollers (48) mounted thereon.

3. The dock unit according to claim 1 or 2, **characterised by** that the variable dock unit (20) is adapted for coupling with another variable dock unit (20) having a walking platform (22) with an aircraft section receiving cut-out portion (26) therein, such that when coupled the walking platforms (22) of the two dock units (20) form a substantially continuous walking surface (24) and the two cut-out portions (26) are adapted for receiving an aircraft section jointly.

4. The dock unit according to claim 3, **characterised by** that the cut-out portion (26) of the walking platform (22) is a corner cut-out portion (26') for receiving an aircraft landing gear (8) and/or aircraft support member, and the slide trays (28) form a walking surface extension (30) covering the whole corner cut-out portion (26') in the extracted position.

5. The dock unit according to claim 2, **characterised by** comprising a lower and an upper walking platform (22) mounted on the support structure (34) such as to allow lifting and lowering of the platforms (22), and the lower and upper walking platforms (22) each having a cut-out portion (26) for receiving an aircraft nose section, and the cut-out portion (26) has a guard rail member (56a) mounted with respect to the walking platform (22) at the aircraft nose tip side of the cut-out portion (26), and preferably a guard rail wing (56b) is pivotally connected to the guard rail member (56a), which guard rail wing (56b) blocks the cut-out portion (26) from the direction of the walking platform (22) at the aircraft nose tip when in the open position.

6. Modular docking system (10) for the maintenance of at least two types of aircrafts (2), **characterised by** comprising a variable dock unit (20) according to any of claims 1 to 5.

7. The docking system according to claim 6, **characterised by** comprising variable dock units (20) of a fuselage side dock kit (15), and the dimensions of the walking platform (22) and the cut-out portions (26) of the variable dock units (20) is such that:
- the variable dock units (20) can be assembled beside the fuselage (3) of a first type of aircraft (2) in a first assembly, wherein the slide trays (28) of at least part of the dock units (20) are partially retracted for receiving the landing gear (8) and optionally for receiving support members of the first type of aircraft (2), while the slide trays (28) at the remaining cut-out portions (26) of the dock units (20) are fully extracted to cover said remaining cut-out portions (26) with a walking surface extension (30); and
- the variable dock units (20) can be assembled beside the fuselage (3) of a second type of aircraft (2) in a second assembly, wherein the slide trays (28) of at least part of the dock units (20) are partially retracted for receiving the landing gear (8) and optionally support members of the second type of aircraft (2), while the slide trays (28) at the remaining cut-out portions (26) of the dock units (20) are fully extracted to cover the remaining cut-out portions (26) with a walking surface extension (30).

8. The docking system according to claim 7, **characterised by** that the fuselage side dock kit (15) comprises four variable dock unit pairs (32), wherein:
- the dock unit (20) members of each variable dock unit pair (32) is formed such that when assembling the dock unit (20) members the two walking platforms (22) form a substantially continuous walking surface and the two cut-out portions (26) are adapted for receiving an aircraft section jointly, and
- the dimensions of the walking platforms (22) and the cut-out portions (26) of the variable dock unit pairs (32) are such that when assembling the variable dock units (32) beside the fuselage (3) of an aircraft (2) in the assembly corresponding to the type of the aircraft (2):
• the cut-out portions (26) of the dock unit pair (32) nearest to the fuselage (3) receive the landing gear (8) of the given type of aircraft (2), the slide trays (28) being at least partially retracted; and
• the cut-out portions (26) of the dock unit pair (32) further from the fuselage (3) are either covered by the fully extracted slide trays (28) or the cut-out portions (26) receive the support members of the given type of aircraft (2), the slide trays (28) being at least partially retracted.

9. The docking system according to claim 8, **characterised by** that the four variable dock unit pairs (32) comprise a first dock unit pair (32) and a second dock unit pair (32) being symmetric therewith, as well as a third dock unit pair (32) and a forth dock unit pair (32) being symmetric with the third dock unit pair (32), wherein:
- when assembling the components of the first dock unit pair (32) the dock units (20) form a walking surface (24) of approx. 3 m x 7 m, the cut-out portions (26) of the two dock units (20) jointly form a single opening of approx. 1.8 m x 0.9 m reaching into the side of the dock unit pair (32), the centre line of which is approx. 2.5 m from the shorter side of the assembled dock unit pair (32); and
- when assembling the components of the third dock unit pair (32) the dock units (20) form a walking surface (24) of approx. 2.5 m x 7 m, the cut-out portions (26) of the two dock units (20) jointly form a single opening of approx. 1.8 m x 0.9 m reaching into the side of the dock unit pair (32), the centre line of which is approx. 2.5 m from the shorter side of the assembled dock unit pair (32).

10. The docking system according to any of claims 6 to 9, **characterised by** comprising a wing dock assembly kit (14) having wing outer section and wing middle section dock units (L1, L2, R1, R2), which comprise:
- a support structure (34);
- at least two walking platforms (22), which are mounted beside each other liftably and lowerably on the support structure (34), and
- lifting means (36) for lifting and lowering the walking platforms (22).

11. The docking system according to any of claims 6 to 10, **characterised by** comprising a nose dock (12) having a variable dock unit (20), and the nose dock (12) comprising two liftable and lowerable walking platforms (22) mounted one below the other on the support structure (34).

12. The docking system according to any of claims 6 to 11, **characterised by** comprising an engine dock kit (15a), which comprises an engine underside dock unit (L3, R3) and an engine side dock unit (L8, R8) of variable height.

13. A method for designing a modular docking system for the maintenance of at least two types of aircrafts, **characterised by** comprising the steps of:
- recording the dimensional parameters of at least two types of aircrafts, preferably including the relative positions and dimensions of the fuselage, the wings, the landing gear, the engines and the support places of the aircraft,
- designing a fuselage side dock kit by choosing the dimensions of the dock units according to any of claims 1 to 4 such that:
• the variable dock units (20) can be assembled beside the fuselage (3) of a first type of aircraft (2) in a first assembly, wherein the slide trays (28) of at least part of the dock units (20) are partially retracted for receiving the landing gear (8) and optionally support members of the first type of aircraft (2), while the slide trays (28) at the remaining cut-out portions (26) of the dock units (20) are fully extracted to cover the remaining cut-out portions (26) with a walking surface extension (30); and
• the variable dock units (20) can be assembled by the side of the fuselage (3) of a second type of aircraft (2) in a second assembly, wherein the slide trays (28) of at least part of the dock units (20) are partially retracted for receiving the landing gear (8) and optionally support members of the second type of aircraft (2), while the slide trays (28) at the remaining cut-out portions (26) of the dock units (20) are fully extracted to cover the remaining cut-out portions (26) with a walking surface extension (30).

14. The method according to claim 11, **characterised by** that at least a part of the variable dock units (20) comprise lifting means (36) for lifting and lowering the walking platform (22) with respect to the support structure (34), and choosing the range of lifting and lowering such as to allow the walking platform (22) to be lifted in the required height for each type of aircraft (2).

15. The method according to claim 11, **characterised by** designing at least four variable dock unit pairs (32), which form a fuselage side dock unit kit (15), the method comprising:
- designing the dock unit (20) members of each variable dock unit pair (32) such that when assembling the dock unit (20) members the two walking platforms (22) form a substantially continuous walking surface and the two cut-out portions (26) are adapted for receiving an aircraft section jointly, and
- choosing the dimensions of the walking platforms (22) and cut-out portions (26) of the variable dock unit pairs (32) such that when assembling the variable dock units (32) beside the fuselage (3) of an aircraft (2) in the assembly corresponding to the type of the aircraft (2):
• the cut-out portions (26) of the dock unit pair (32) nearest to the fuselage (3) receive the landing gear (8) of the given type of aircraft (2), the slide trays (28) being at least partially retracted; and
• the cut-out portions (26) of the dock unit pair (32) further from the fuselage (3) are either covered by the fully extracted slide trays (28) or the cut-out portions (26) receive the support members of the given type of aircraft (2), the slide trays (28) being at least partially retracted.
